(19) Europäisches Patentamt
European Patent Office
Office européen des brevets

(11) Veröffentlichungsnummer: **0 443 411 B1**

# (12) EUROPÄISCHE PATENTSCHRIFT

(45) Veröffentlichungstag der Patentschrift: **09.08.95**

(51) Int. Cl.$^{6}$: **A01N 55/00**

(21) Anmeldenummer: **91101927.1**

(22) Anmeldetag: **12.02.91**

Die Akte enthält technische Angaben, die nach dem Eingang der Anmeldung eingereicht wurden und die nicht in dieser Patentschrift enthalten sind.

## (54) Wasserdispergierbare Granulate von Neophanen und Azaneophanen zur Anwendung im Pflanzenschutz.

(30) Priorität: **17.02.90 DE 4005154**

(43) Veröffentlichungstag der Anmeldung:
**28.08.91 Patentblatt 91/35**

(45) Bekanntmachung des Hinweises auf die Patenterteilung:
**09.08.95 Patentblatt 95/32**

(84) Benannte Vertragsstaaten:
**AT BE CH DE DK ES FR GB GR IT LI NL**

(56) Entgegenhaltungen:
**EP-A- 0 202 893**
**EP-A- 0 224 024**
**EP-A- 0 249 015**
**EP-A- 0 336 199**
**DE-A- 3 604 781**
**US-A- 4 804 653**

**CHEMICAL ABSTRACTS, Band 109, Nr. 1, 4. Juli 1988, Seite 239, Zusammenfassung Nr. 2496j, Columbus, Ohio, US; & JP- A-63 17 802 (MITSUI TOATSU) 25-01-1988**

**Römpp Chemielexikon, Georg Thieme Verlag, 1991, Seite 2681**

(73) Patentinhaber: **Hoechst Schering AgrEvo GmbH**
**Gerichtstrasse 27**
**D-13342 Berlin (DE)**

(72) Erfinder: **Röchling, Hans, Dr.**
**Geierfeld 25**
**W-6232 Bad Soden am Taunus (DE)**
Erfinder: **Baumgärtner, Joachim**
**Stegerwaldstrasse 40**
**W-6000 Frankfurt am Main (DE)**

EP 0 443 411 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind wasserdispergierbare Granulate von Verbindungen der Formel I

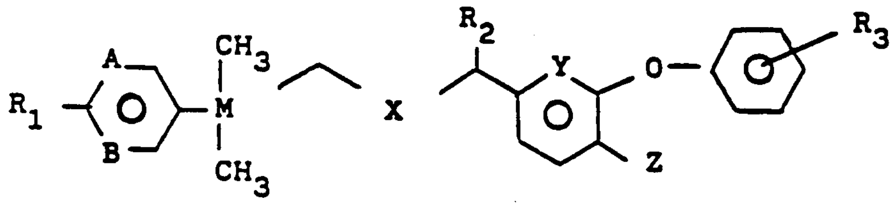

(I),

worin

| | |
|---|---|
| A, B = | unabhängig voneinander CH, $CR_4$, N |
| X = | $CH_2$, O, S, |
| Y = | CH, N, |
| Z = | H, F, |
| $R_1$, $R_4$ = | unabhängig voneinander H, Halogen, ($C_1$-$C_3$)-Alkyl, ($C_1$-$C_3$)-Halogenalkyl, ($C_1$-$C_3$)-Alkoxy, ($C_1$-$C_3$)-Halogenalkoxy, ($C_1$-$C_4$)-Alkylthio, ($C_1$-$C_4$)-Halogenalkylthio oder $R_1$ und $R_4$ zusammen = $-CH_2-O-CH_2-$ ; |
| $R_2$ = | H, ($C_1$-$C_3$)-Alkyl, Ethinyl, Vinyl, Halogen, Cyano, |
| $R_3$ = | H, Halogen, ($C_1$-$C_4$)-Alkyl, ($C_1$-$C_3$)Alkoxy und |
| M = | C oder Si bedeuten, dadurch gekennzeichnet, daß diese neben einer feinteiligen hochadsorptiven Kieselsäure und geeigneten Netz- und Dispergiermitteln ein Aluminium- oder Magnesium-Aluminium-Silikat und ein Mono-, Di- oder oder Trisaccharid enthalten. |

Alkyl steht für einen geradkettigen oder verzweigten Alkylrest.

Bevorzugt bedeuten A, B = CH oder N, X = $CH_2$, $R_1$ = ($C_1$-$C_3$)-Alkoxy, $R_2$ = H, $R_3$ = H oder F und M = Si.

Insbesondere bevorzugt unter den Verbindungen der Formel I ist diejenige, bei der M = Si, $R_1$ = Ethoxy, A, B = CH, X = $CH_2$, $R_2$ = H, Y = CH, Z = F und $R_3$ = H bedeuten (Ia).

Wirkstoffe aus der Gruppe der Neophane und Azaneophane (I) eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam (EP-A 0 224 024, EP-A 0 249 015, EP-A 0 288 810). In diesen Dokumenten sind auch die üblichen Formulierungstypen für Insektizide oder Akarizide beschrieben.

Neophane und Azaneophane der Formel I besitzen neben einer breiten insektiziden Wirksamkeit eine ungewöhnlich günstige Warmblütertoxizität sowie eine sehr geringe Toxizität gegen Fische und Vögel. Diese positiven Wirkstoffeigenschaften sollten durch eine entsprechende Formulierung unterstützt werden. Zweckmäßig erscheint zunächst eine Flüssigformulierung in Form einer wäßrigen Emulsion (EW), da die Verbindungen I als hochsiedende, ölige, in Wasser sehr wenig lösliche Substanzen vorliegen.

In einigen Ländern werden jedoch insbesondere zur Anwendung im Obst- und Teeanbau Festformulierungen in Form von Spritzpulvern verlangt. Spritzpulver stäuben jedoch bei Herstellung und Anwendung; daher besteht das Risiko der Staubexplosion sowie der Kontamination des Anwenders.

Eine umweltfreundliche Alternative für Spritzpulver-Formulierungen sind wasserdispergierbare Granulate, da diese frei fließend, staubarm, gut dosierbar und frei von Lösungmitteln sind. Sie lassen sich problemlos in Polyethylenbehältern, Beuteln aus Verbundfolie mit Pappschachteln oder in Papptrommeln verpacken, die leicht zu entsorgen sind.

Zur Herstellung von dispergierbaren Granulaten stehen zahlreiche Verfahren zur Verfügung (vgl. H.B. Ries "Granuliertechnik und Granuliergeräte" in Aufbereitungstechnik Nr. 3, 1970, S. 147 und M. Rosch und R. Probst in Verfahrenstechnik 9 (1975), S. 59 bis 64). Insbesondere ist die Herstellung von wasserdispergierbaren Granulaten nach dem Wirbelschichtverfahren beschrieben, siehe US-A 3920442, GB-A 1401304, EP-A 242845, Deutsche Pat. Anmeldungen P 3909455.3 und P 3926800.4 sowie M. Rosch und R. Probst in Verfahrenstechnik 9 (1975), S. 59-62. Die dort beschriebenen Verfahren und Formulierungen lassen sich jedoch auf die Neophane und Azaneophane (I) nicht vorteilhaft anwenden. Bei den Wirkstoffen der Formel I handelt es sich nämlich um ölige Flüssigkeiten, die daher vor der Granulierung an einen pulverförmigen

Träger adsorbiert werden müssen. Als geeignete Adsorptionsmittel werden hochadsorptive gefällte Kieselsäuren eingesetzt. Bei der anschließenden Granulierung durch Besprühen des Adsorbates mit einer Lösung von Netz- und Dispergiermitteln im Wirbelbett erhält man Granulate, die nur schwer in Wasser dispergiert werden können, hohe Naßsiebrückstände aufweisen und daher in der Praxis nur schlecht verwendbar sind (siehe Herstellungsbeispiel 1).

Es bestand daher die Aufgabe, wasserdispergierbare Granulate von Neophanen und Azaneophanen (I) zu entwickeln, die bei hoher spontaner Dispergierfähigkeit und möglichst geringem Naßsiebrückstand zusätzlich eine gute Lagerstabilität aufweisen.

Es wurde gefunden, daß durch Zusatz von Mono-, Di- oder Trisacchariden im Gewichtsverhältnis hochadsorptive Kieselsäure: Mono-, Di- oder Trisaccharid = 1 : 1,8 bis 1 : 3 eine deutliche Verbesserung der spontanen Dispergierfähigkeit und eine erhebliche Reduktion der Naßsiebrückstände erreicht werden kann (Herstellungsbeispiel 2). Zusätzlich wird durch den Zusatz von Mono-, Di- oder Trisacchariden die Stabilität der einzelnen Granulatkörner verbessert.

Das Granulat nach Beispiel 2 besitzt jedoch noch keine ausreichende Lagerstabilität: nach 14 Tagen Lagerung bei 54 °C wird ein hoher Naßrückstand festgestellt.

Es wurde nun überraschender Weise gefunden, daß bei Vermischen des Adsorbates mit einem Aluminiumsilikat bzw. einem Magnesium-Aluminium-Silikat und anschließender Granulierung mit einer Sprühlösung, die ein Mono-, Di- oder Trisaccharid in der angegebenen Menge sowie geeignete Netz- und Dispergiermittel enthält, wasserdispergierbare Granulate mit sehr guten anwendungstechnischen Eigenschaften und guter Lagerstabilität erhalten werden können (Herstellungsbeispiele 4 bis 7).

Als Aluminiumsilikate können z.B. eingesetzt werden: feingemahlene Kaoline und Tone, ®Perlite (Lehmann & Voss & Co.), calciniertes Aluminiumsilikat wie ®Satintone (Fa. Engelhard), als Magnesium-Aluminium-Silikate können beispielsweise verwandt werden: Attapulgus Clay Produkte wie ®Attaclay, ®Attacote, ®Attasorb, ®Attagel (Fa. Engelhard) sowie feingemahlene Fullererden, Bentonite und Montmorillonite. Insbesondere ist die Verwendung von ®Attasorb, ®Satintone und Kaolin 1777 (Ziegler & Co., Wunsiedel) günstig.

Als Mono-, Di- oder Trisaccharide seien beispielhaft genannt: Glucose, Fructose, Maltose, Cellobiose, Lactose, Saccharose, Raffinose. Insbesondere ist die Verwendung von Saccharose vorteilhaft.

Geeignete Netz- und Dispergiermittel sind beispielsweise anion- oder kationaktive, amphoterische und nichtionische oberflächenaktive Substanzen, insbesondere übliche anionische Dispergiermittel, wie das Na-Salz der Sulfonsäure aus m-Kresol + Formaldehyd + Na-Sulfit (Dispergiermittel 1494 ®), Natrium-Oleylmethyltaurid (®Arkopon T), methoxyligninsulfonsaures Natrium (®Vanisperse CB), ligninsulfonsaures Natrium (®Borresperse 3A), Natriummethylnaphthalin-Sulfonat (®Supragil MNS 90), 3-Kern-Nonylphenolnovolak-18EO-Sulfobernsteinsäurehalbester-Natriumsalz (Dispergiermittel 1728®, 18EO = ethoxyliert mit 18 Mol Ethylenoxid), Isodecylsulfobernsteinsäurehalbester-Natriumsalz. (Netzer IS®), Natriumsalz einer Dinaphthylmethan-disulfonsäure (®Dispersogen A, ®Tamol NNO), Natriumsalz einer Sulfonsäure aus Kresol + Formaldehyd + Na-Sulfit + Oxynaphthalinsulfonsäure (Dispergiermittel SS®), Natriumsalz der Dibutylnaphthalinsulfonsäure (®Leonil DB, ®Geropon NK),Natriumpolycarboxylat (®Sopropon T36), Kaliumpolycarboxylat (®Dispersant DG), Natriumphenylsulfonat (®Dispersant GN), Natriumalkylnaphthalinsulfonat (®Supragil WP), Natriumnaphthalinsulfonat, kondensiert (®Supragil NS 90), Na- bzw. K-Salz eines carboxylierten Copolymeren in Kombination mit anionischem Dispergiermittel (®Geropon SC 211 bzw. 213, Fa. Rhône Poulenc) sowie Calcium- oder Natriumligninsulfonate verschiedenster Herkunft; Na-Salz eines Copolymerisates aus Maleinsäure und einem Olefin (®Sokalan CP-Marken, Fa. BASF), Natriumsalz eines Phenolsulfonsäure-Kondensationsproduktes mit anionischem Charakter (®Tamol PP, Fa. BASF), Natrium-Naphthalinsulfonat-Formaldehyd-Kondensationsprodukte (®Morwet D-425, Fa. DeSoto Inc., ® Tamol N-Marken, Fa. BASF), phosphorylierte Ethylenoxid-Propylenoxid-Blockpolymere (z.B. Hoe S 3618, Fa. Hoechst AG; Alkaphos MD-Typen, Fa. Alkaril), ethoxylierte und phosphorylierte styrylsubstituierte Phenole (z.B. Hoe S 3775, Fa. Hoechst AG; ®Soprophor FL, Fa. Rhône Poulenc) und Natriumlaurylätherphosphat (®Forlanit P, Fa. Henkel).

Insbesondere ist es günstig, als Netz- und Dispergiermittel Natriumpolycarboxylat (®Sopropon T36), Natriummethylnaphthalin-Sulfonat (®Supragil MNS 90), Natriumsalz einer Dinaphthylmethan-disulfonsäure (®Dispersogen A, ®Tamol NNO), Natrium-Oleoylmethyltaurid (®Arkopon T), Natriumisopropylnaphthalinsulfonat (®Supragil WP) und Natriumdibutylnaphthalinsulfonat (®Leonil DB) zu verwenden.

Als Adsorptionsmittel können die verschiedenen feinteiligen, hochadsorptiven, durch Fällung erhaltenen Kieselsäuren eingesetzt werden: z.B. ®Sipernat- und ®Wessalon-Typen (Fa. Degussa); insbesondere ist ®Sipernat 50 S geeignet.

Weiterhin können die Granulate Entschäumer, wie Trialkylphosphate, Silikonentschäumer wie z.B. ®Silcolapse 5008, Fa. ICI, ®Silicon-Antischaumemulsion SE2, Fa. Wacker Chemie oder Fluortenside wie

z.B. ®Fluowet PP, Fa. Hoechst AG enthalten.

Der Gehalt an Wirkstoffen der Formel I (Ia) in der fertigen Formulierung kann 0,5 bis 60 Gew.-% betragen, insbesondere 10 bis 40 Gew.-%.

Der Mengenanteil an gefällter Kieselsäure, die als Adsorptionsmittel verwendet wird, ist abhängig von dem jeweiligen Gehalt an der Verbindung der Formel I und liegt bei 30 bis 110 Gew.-%, bevorzugt bei 50 bis 80 Gew.-% des Wirkstoffanteils.

Der Anteil an Aluminium-Silikat bzw. Magnesium-Aluminium-Silikat beträgt 0,5 bis 80 Gew.-% der erfindunsgegemäßen Formulierung, bevorzugt 5 bis 60 Gew.-%.

Der Gehalt an Mono-, Di- oder Trisaccharid in den fertigen Formulierungen kann 5 bis 80 Gew.-% betragen, bevorzugt 20 bis 60 Gew.-%; er hängt insbesondere vom Gehalt an hochadsorptiver Kieselsäure ab und steht zu ihr im Gewichtsverhältnis Kieselsäure:Mono-, Di- oder Trisaccharid = 1:1,8 bis 1:3.

Der Mengenanteil an Netz- und Dispergiermitteln liegt bei 3 bis 30 Gew.-%, bevorzugt bei 5 bis 20 Gew.-% der Formulierung.

Die erfindungsgemäßen wasserdispergierbaren Granulate können auch Mischungen verschiedener Kieselsäuren, verschiedener Silikate oder verschiedener Saccharide enthalten. Als Netz- und Dispergiermittel werden bevorzugt Mischungen aus verschiedenen Vertretern eingesetzt (siehe Ausführungsbeispiele).

Bei allen genannten Formulierungshilfsstoffen handelt es sich um dem Fachmann hinreichend bekannte Substanzen, die in der Literatur beschrieben sind. Beispielsweise: Watkins, "Handbook of Insecticide Dust Diluents and Carriers", 2nd Ed., Darland Books, Caldwell N.J.; H.v. Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's "Detergents and Emulsifiers Annual", MC Publ. Corp., Ridgewood N.J.; Sisley and Wood, "Encylopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Zur Herstellung der wasserdispergierbaren Granulate wird zunächst feinteilige Kieselsäure mit Aluminium-Silikat bzw. Magnesium-Aluminium-Silikat gemischt, anschließend wird mit Wirkstoff der Formel I versetzt und bis zur Homogenität im Mischer behandelt. Man kann auch erst den Wirkstoff an Kieselsäure adsorbieren und anschließend mit Aluminium-Silikat bzw. Magnesium-Aluminium-Silikat mischen. Das so erhaltene Adsorbat wird im Wirbelbett durch Besprühen mit einer wäßrigen Lösung von Mono-, Di- oder Trisaccharid sowie Netz- und Dispergiermitteln granuliert.

**Herstellungsbeispiele**

Allgemeine Angaben zur Beurteilung und Herstellung

Die spontane Dispergierfähigkeit der Granulatformulierung wird nach einer Bewertungsskala von 1 bis 4 beurteilt. Zu diesem Zweck wird zunächst 1 g des Granulats in einem mit standardisiertem Wasser (30 °C, 342 ppm Wasserhärte) gefülltem 1 l-Meßzylinder gegeben. Nach 1 Minute wird der Meßzylinder langsam um 180 °C gedreht und wieder in die Ausgangslage zurückgebracht. Dieser Vorgang wird dreimal wiederholt. Die Bewertung erfolgt nach folgendem Schema:

**Bewertungsskala**

1 Alle Granulatkörner sind dispergiert.

Falls nicht dispergierte Granulatkörner vorhanden sind, wird 2 Minuten nach Versuchsbeginn nochmals dreimal wie beschrieben umgeschüttelt und wie folgt bewertet:

2 Das Granulat ist nun vollständig dispergiert.

3 Reste des Granulats sind nicht dispergiert.

4 Das Granulat ist zum überwiegenden Teil nicht dispergiert.

Die Schwebefähigkeit wird als diejenige Menge des Präparates (Gew.-%) angegeben, die sich nach Ablauf einer Sedimentaionszeit von 30 Minuten in den oberen neun zehntel Volumenteilen einer Suspension befindet (siehe CIPAC-Handbook Vol. 1 (1970), S. 861).

Als Naßsiebrückstand wird die Substanzmenge bezeichnet, die nach 10 Minuten Spülen mit einer definierten Wassermenge auf einem Sieb von 250 µm bzw. 71 µm zurückbleibt. Eine Beschreibung der Methode ist bei: "Richtlinien für die amtliche Prüfung von Pflanzenschutzmitteln", Biol. Bundesanstalt Braunschweig (1988), gegeben.

Zur Herstellung der Adsorbate wird ein Lödige-Mischer verwandt: Gebr. Lödige, Maschinenbau GmbH, D-479 Paderborn. Zur Granulierung kleinerer Mengen wird ein Laborwirbelbettgranulierer Büchi 170 (Büchi

Laboratoriumstechnik GmbH, Postfach 11 54, 7332 Eislingen/Fils) eingesetzt. Für Chargen bis zu 400 g Produkt wird ein Aeromatic-Wirbelschicht-Laborgerät Größe 1 von Aeromatic AG, CH-4416 Bubendorf/Schweiz, verwendet. Größere Ansätze, bis zu 15 kg Produkt, werden auf einem Wirbelbett der Fa. Glatt (GPCG 5) ausgeführt.

**Beispiel 1**

Granulat ohne Mono-, Di- oder Trisaccharid und ohne Aluminium-Silikat bzw. Magnesium-Aluminium-Silikat

| | |
|---|---|
| 21,5 Gew.-% | einer Verbindung der Formel I (Ia) werden an |
| 55,5 Gew.-% | feinteiliger, hochadsorptiver Kieselsäure (®Sipernat 50S) durch intensives Mischen in einem Lödige-Mischer adsorbiert. Das so erhaltenen Adsorbat wird im Laborwirbelbettgranulierer Büchi 710 durch Besprühen mit einer Lösung von |
| 12,0 Gew.-% | Kalium-Salz eines carboxylierten Copolymeren in Kombination mit anionischen Dispergiermitteln (®Geropon SC 213), |
| 8,0 Gew.-% | Natriumpolycarboxylat (®Sopropon T36) und |
| 55,0 Gew.-% | Wasser |
| | granuliert. |

| | | | |
|---|---|---|---|
| Restfeuchte: | 3,0 % | | |
| Spontane Dispergierfähigkeit: | 3 - 4 | | |
| Schwebefähigkeit: | 53 % | | |
| Naßsiebrückstand, 250 µm-Sieb: | 1,2 % | 71 µm-Sieb: | 19,7 % |

**Beispiel 2**

Granulat ohne Aluminium-Silikat bzw. Magnesium-Aluminium-Silikat

| | |
|---|---|
| 21,7 Gew.-% | einer Verbindung der Formel I (Ia) werden an |
| 22,3 Gew.-% | ® Sipernat 50S durch intensives Mischen in einem Lödige-Mischer adsorbiert. Das so erhaltene Adsorbat wird im Laborwirbelbettgranulierer Büchi 710 durch Besprühen mit einer Lösung von |
| 6,0 Gew.-% | ®Geropon SC 213, |
| 4,0 Gew.-% | ®Sopropon T36 und |
| 45,0 Gew.-% | Saccharose in |
| 56,0 Gew.-% | Wasser granuliert. |

Mit 87 % Ausbeute wird ein wasserdispergierbares Granulat mit einer Teilchengröße von 0,5 - 1,8 mm erhalten.

| | | | |
|---|---|---|---|
| Restfeuchte: | 1,0 % | | |
| Spontane Dispergierfähigkeit: | 1 | | |
| Schwebefähigkeit: | 94 % | | |
| Naßsiebrückstand, 250 µm-Sieb: | Spur | 71 µm-Sieb: | 0,1 % |

Nach 14 Tagen Lagerung bei 54 °C unter Druck (25 g/cm$^2$) (CIPAC Handbook, Vol. 1 (1970), S.951) tritt eine drastische Verschlechterung der anwendungstechnischen Eigenschaften ein:

| | | |
|---|---|---|
| Spontane Dispergierfähigkeit: | 3 - 4 | |
| Schwebefähigkeit: | 70,4 % | |
| Naßsiebrückstand, 250 µm-Sieb: | Spur | 71 µm-Sieb: 19,5 % |

**Beispiel 3**

| | |
|---|---|
| 21,7 Gew.-% | einer Verbindung der Formel I (Ia) werden an einem Gemisch aus |
| 16,0 Gew.-% | ® Sipernat 50S |
| 10,8 Gew.-% | Calciniertes Aluminium-Silikat (®Satintone Nr. 5) durch intensives Mischen in einem Lödige-Mischer adsorbiert. Das so erhaltene Adsorbat wird im Laborwirbelbettgranulierer Büchi 710 durch Besprühen mit einer Lösung von |
| 6,0 Gew.-% | ®Geropon SC 213 |
| 4,0 Gew.-% | ®Sopropon T36 |
| 0,5 Gew.-% | ethoxyliertes und phosphoryliertes styrylsubstituiertes Phenol (HOE S 3775) und |
| 40,0 Gew.-% | Saccharose in |
| 55,0 Gew.-% | Wasser |
| | granuliert. |

Mit 84 % Ausbeute wird ein wasserdispergierbares Granulat mit einer Teilchengröße von 0,3 - 1,6 mm erhalten.

| | | |
|---|---|---|
| Restfeuchte: | 1,0 % | |
| Spontane Dispergierfähigkeit: | 1 | |
| Schwebefähigkeit: | 94 % | |
| Naßsiebrückstand, 250 µm-Sieb: | Spur | 71 µm-Sieb: 0,15 % |

Nach 14 Tagen Lagerung bei 54 °C unter Druck (25 g/cm$^2$) sind die anwendungstechnischen Eigenschaften des Granulates einwandfrei:

| | | |
|---|---|---|
| Spontane Dispergierfähigkeit: | 2 | |
| Schwebefähigkeit: | 83,6 % | |
| Naßsiebrückstand, 250 µm-Sieb: | 0 | 71 µm-Sieb: 0,5 % |

**Beispiel 4**

| | |
|---|---|
| 21,7 Gew.-% | einer Verbindung der Formel I (Ia) werden an einem Gemisch aus |
| 15,0 Gew.-% | ® Sipernat 50S |
| 11,8 Gew.-% | Magnesium-Aluminium-Silikat (®Attasorb RVM) durch intensives Mischen in einem Lödige-Mischer adsorbiert. Das so erhaltene Adsorbat wird im Laborwirbelbettgranulierer Büchi 710 durch Besprühen mit einer Lösung von |
| 6,0 Gew.-% | ®Geropon SC 213 |
| 4,0 Gew.-% | ®Sopropon T36 |
| 0,8 Gew.-% | Natriumlaurylätherphosphat (®Forlanit P) und |
| 39,7 Gew.-% | Saccharose in |
| 57,0 Gew.-% | Wasser |

granuliert.

Mit 86 % Ausbeute wird ein wasserdispergierbares Granulat mit einer Teilchengröße von 0,25 - 1,5 mm erhalten.

| | | | |
|---|---|---|---|
| Restfeuchte: | 1,0 % | | |
| Spontane Dispergierfähigkeit: | 1 | | |
| Schwebefähigkeit: | 95 % | | |
| Naßsiebrückstand, 250 µm-Sieb: | 0 | 71 µm-Sieb: | Spur |

Nach 14 Tagen Lagerung bei 54 °C unter Druck (25 g/cm$^2$) sind die anwendungstechnischen Eigenschaften des Granulates einwandfrei:

| | | | |
|---|---|---|---|
| Spontane Dispergierfähigkeit: | 1 | | |
| Schwebefähigkeit: | 88,4 % | | |
| Naßsiebrückstand, 250 µm-Sieb: | Spur | 71 µm-Sieb: | 0,2 % |

**Beispiel 5**

Herstellung wie bei den Beispielen 3 und 4 beschrieben.

| | |
|---|---|
| 21,7 Gew.-% | einer Verbindung der Formel I |
| 15,0 Gew.-% | ® Sipernat 50S |
| 11,8 Gew.-% | ®Attasorb RVM |
| 0,5 Gew.-% | ®Forlanit P |
| 10,0 Gew.-% | Natriumsalz einer Dinaphthylmethan-disulfonsäure (®Tamol NNO) |
| 5,0 Gew.-% | Dibutylnaphthalinsulfonsäure (®Leonil DB) |
| 2,0 Gew.-% | Natriumoleoylmethyltaurid (®Arkopon T) |
| 32,0 Gew.-% | Saccharose |
| 2,0 Gew.-% | Restfeuchte |

| | | | |
|---|---|---|---|
| Spontane Dispergierfähigkeit: | 1 | | |
| Schwebefähigkeit: | 88 % | | |
| Naßsiebrückstand, 250 µm-Sieb: | Spur | 71 µm-Sieb: | 0,19 % |

Nach 14 Tagen Lagerung bei 54 °C und 25 g/cm$^2$ Druck:

| | | | |
|---|---|---|---|
| Spontane Dispergierfähigkeit: | 1 | | |
| Schwebefähigkeit: | 81 % | | |
| Naßsiebrückstand, 250 µm-Sieb: | Spur | 71 µm-Sieb: | 0,28 % |

**Beispiel 6**

Herstellung wie bei den Beispielen 3 und 4 beschrieben.

| | |
|---|---|
| 21,7 Gew.-% | einer Verbindung der Formel I |
| 15,0 Gew.-% | ® Sipernat 50S |

| | |
|---|---|
| 11,8 Gew.-% | ®Attasorb RVM |
| 5,0 Gew.-% | ®Leonil DB |
| 2,0 Gew.-% | Arkopon T |
| 10,0 Gew.-% | Natrium-Naphthalinsulfonat-Formaldehyd-Kondensationsprodukt (®Morwet D-425) |
| 32,5 Gew.-% | Saccharose |
| 2,0 Gew.-% | Restfeuchte |

| | | | |
|---|---|---|---|
| Spontane Dispergierfähigkeit: | 1 | | |
| Schwebefähigkeit: | 93 % | | |
| Naßsiebrückstand, 250 µm-Sieb | 0 | 71 µm-Sieb: | 0,31 % |

Nach 14 Tagen Lagerung bei 54 °C und 25 g/cm² Druck:

| | | | |
|---|---|---|---|
| Spontane Dispergierfähigkeit: | 1 | | |
| Schwebefähigkeit: | 84 % | | |
| Naßsiebrückstand, 250 µm-Sieb: | 0 | 71 µm-Sieb: | 0,42 % |

**Beispiel 7**

Herstellung wie bei den Beispielen 3 und 4 beschrieben.

| | |
|---|---|
| 21,5 Gew.-% | einer Verbindung der Formel I |
| 15,0 Gew.-% | ® Sipernat 50S |
| 11,0 Gew.-% | ®Attasorb RVM |
| 2,0 Gew.-% | ®Arkopon T |
| 3,0 Gew.-% | ®Leonil DB |
| 3,0 Gew.-% | ®Sopropon T36 |
| 2,0 Gew.-% | ®Tamol NNO |
| 40,5 Gew.-% | Saccharose |
| 2,0 Gew.-% | Restfeuchte |

| | | | |
|---|---|---|---|
| Spontane Dispergierfähigkeit: | 1 | | |
| Schwebefähigkeit: | 94 % | | |
| Naßsiebrückstand, 250 µm-Sieb: | Spur | 71 µm-Sieb: | 0,2 % |

Nach 14 Tagen Lagerung bei 54 °C und 25 g/cm² Druck:

| | | | |
|---|---|---|---|
| Spontane Dispergierfähigkeit: | 1 | | |
| Schwebefähigkeit: | 90 % | | |
| Naßsiebrückstand, 250 µm-Sieb: | Spur | 71 µm-Sieb: | 0,37 % |

**Patentansprüche**

**Patentansprüche für folgende Vertragsstaaten : AT, BE, CH, DE, DK, FR, GB, GR, IT, LI, NL**

1. Wasserdispergierbare Granulate von Verbindungen der Formel I

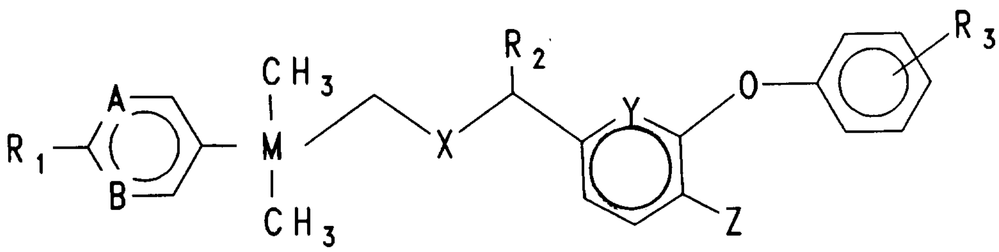

(I),

worin

| | |
|---|---|
| A, B = | unabhängig voneinander CH, $CR_4$, N, |
| X = | $CH_2$, O, S, |
| Y = | CH, N, |
| Z = | H, F, |
| $R_1$, $R_4$ = | unabhängig voneinander H, Halogen, $(C_1$-$C_3)$-Alkyl, $(C_1$-$C_3)$-Halogenalkyl, $(C_1$-$C_3)$-Alkoxy, $(C_1$-$C_3)$-Halogenalkoxy, $(C_1$-$C_4)$-Alkylthio, $(C_1$-$C_4)$-Halogenalkylthio oder $R_1$ und $R_4$ zusammen = $-CH_2$-O-$CH_2$, |
| $R_2$ = | H, $(C_1$-$C_3)$-Alkyl, Ethinyl, Vinyl, Halogen, Cyano, |
| $R_3$ = | H, Halogen, $(C_1$-$C_4)$-Alkyl, $(C_1$-$C_3)$-Alkoxy und |
| M = | C oder Si bedeuten, |

dadurch gekennzeichnet, daß diese neben einer feinteiligen hochadsorptiven Kieselsäure und geeigneten Netz- und Dispergiermitteln ein Aluminium- oder Magnesium-Aluminium-Silikat und ein Mono-, Di- oder Trisaccharid enthalten und das Gewichtsverhältnis von Kieselsäure:Mono-, Di- oder Trisaccharid 1:1,8 bis 1:3 beträgt.

2. Wasserdispergierbare Granulate gemäß Anspruch 1, dadurch gekennzeichnet, daß in Formel I A, B = CH oder N, X = $CH_2$, $R_1$ = $(C_1$-$C_3)$-Alkoxy, $R_2$ = H, $R_3$ = H oder F und M = Si bedeuten.

3. Wasserdispergierbare Granulate gemäß Anspruch 1 oder 2, dadurch gekennzeichnet, daß in Formel I M = Si, $R_1$ = Ethoxy, A, B = CH, X = $CH_2$, $R_2$ = H, Y = CH, Z = F und $R_3$ = H bedeuten.

4. Wasserdispergierbare Granulate gemäß einem oder mehreren der Ansprüche 1 bis 3, dadurch gekennzeichnet, daß diese 0,5 bis 60 Gew.-% einer Verbindung der Formel I enthalten und das Gewichtsverhältnis der darin enthaltenen feinteiligen hochadsorptieren Kieselsäure zum darin enthalten Wirkstoff 0,3:1 bis 1,1:1 beträgt.

5. Wasserdispergierbare Granulate gemäß einem oder mehreren der Ansprüche 1 bis 4, dadurch gekennzeichnet, daß diese 0,5 bis 80 Gew.-% eines Aluminium- oder Magnesium-Aluminium-Silikats, 5 bis 80 Gew.-% eines Mono-, Di- oder Trisaccharids und 3 bis 30 Gew.-% an Netz- und Dispergiermitteln enthalten.

6. Wasserdispergierbare Granulate gemäß einem oder mehreren der Ansprüche 1 bis 5, dadurch gekennzeichnet, daß diese 0,5 bis 60 Gew.-% eines Aluminium- oder Magnesium-Aluminium-Silikats, 20 bis 60 Gew.-% eines Mono-, Di- oder Trisaccharids und 5 bis 20 Gew.-% an Netz- und Dispergiermitteln enthalten.

7. Wasserdispergierbare Granulate gemäß einem oder mehreren der Ansprüche 1 bis 6, dadurch gekennzeichnet, daß diese als Disaccharid Saccharose enthalten.

8. Verfahren zur Bekämpfung von Schadinsekten oder Akariden, dadurch gekennzeichnet, daß man auf diese oder die von diesen befallenen Pflanzen, Flächen oder Substrate eine wirksame Menge eines wasserdispergierbaren Granulats gemäß einem oder mehreren der Ansprüche 1 bis 7 appliziert.

**9.** Verwendung von wasserdispergierbaren Granulaten gemäß einem oder mehreren der Ansprüche 1 bis 7 zur Bekämpfung von Schadinsekten oder Akariden.

**Patentansprüche für folgenden Vertragsstaat : ES**

**1.** Verfahren zur Herstellung von wasserdispergierbaren Granulaten von Verbindungen der Formel I

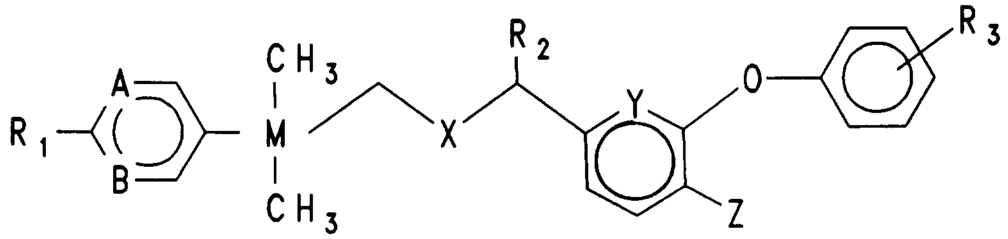

(I),

worin

| | |
|---|---|
| A, B = | unabhängig voneinander CH, $CR_4$, N, |
| X = | $CH_2$, O, S, |
| Y = | CH, N, |
| Z = | H, F, |
| $R_1$, $R_4$ = | unabhängig voneinander H, Halogen, $(C_1-C_3)$-Alkyl, $(C_1-C_3)$-Halogenalkyl, $(C_1-C_3)$-Alkoxy, $(C_1-C_3)$-Halogenalkoxy, $(C_1-C_4)$-Alkylthio, $(C_1-C_4)$-Halogenalkylthio oder $R_1$ und $R_4$ zusammen = $-CH_2-O-CH_2$, |
| $R_2$ = | H, $(C_1-C_3)$-Alkyl, Ethinyl, Vinyl, Halogen, Cyano, |
| $R_3$ = | H, Halogen, $(C_1-C_4)$-Alkyl, $(C_1-C_3)$-Alkoxy und |
| M = | C oder Si bedeuten, |

welche neben einer feinteiligen hochadsorptiven Kieselsäure und geeigneten Netz- und Dispergiermitteln ein Aluminium- oder Magnesium-Aluminium-Silikat und ein Mono-, Di- oder Trisaccharid enthalten und worin das Gewichtsverhältnis von Kieselsäure:Mono-, Di- oder Trisaccharid 1:1,8 bis 1:3 beträgt, dadurch gekennzeichnet, daß man ein Adsorbat des Wirkstoffes an Kieselsäure und Aluminium-Silikat bzw. Magnesium-Aluminium-Silikat im Wirbelbett durch Besprühen mit einer wäßrigen Lösung von Mono-, Di- oder Trisaccharid sowie Netz- und Dispergiermittel granuliert.

**2.** Verfahren gemaß Anspruch 1, dadurch gekennzeichnet, daß in Formel I A, B = CH oder N, X = $CH_2$, $R_1$ = $(C_1-C_3)$-Alkoxy, $R_2$ = H, $R_3$ = H oder F und M = Si bedeuten.

**3.** Verfahren gemaß Anspruch 1 oder 2, dadurch gekennzeichnet, daß in Formel I M = Si, $R_1$ = Ethoxy, A, B = CH, X = $CH_2$, $R_2$ = H, Y = CH, Z = F und $R_3$ = H bedeuten.

**4.** Verfahren gemäß einem oder mehreren der Ansprüche 1 bis 3, dadurch gekennzeichnet, daß wasserdispergierbare Granulate hergestellt werden, welche 0,5 bis 60 Gew.-% einer Verbindung der Formel I enthalten und worin das Gewichtsverhältnis der darin enthaltenen feinteiligen hochadsorptieren Kieselsäure zum darin enthalten Wirkstoff 0,3:1 bis 1,1:1 beträgt.

**5.** Verfahren gemäß einem oder mehreren der Ansprüche 1 bis 4, dadurch gekennzeichnet, daß wasserdispergierbare Granulate hergestellt werden, welche 0,5 bis 80 Gew.-% eines Aluminium- oder Magnesium-Aluminium-Silikats, 5 bis 80 Gew.-% eines Mono-, Di- oder Trisaccharids und 3 bis 30 Gew.-% an Netz- und Dispergiermitteln enthalten.

**6.** Verfahren gemäß einem oder mehreren der Ansprüche 1 bis 5, dadurch gekennzeichnet, daß wasserdispergierbare Granulate hergestellt werden, welche 0,5 bis 60 Gew.-% eines Aluminium- oder Magnesium-Aluminium-Silikats, 20 bis 60 Gew.-% eines Mono-, Di- oder Trisaccharids und 5 bis 20 Gew.-% an Netz- und Dispergiermitteln enthalten.

**7.** Verfahren gemäß einem oder mehreren der Ansprüche 1 bis 6, dadurch gekennzeichnet, daß wasserdispergierbare Granulate hergestellt werden, welche als Disaccharid Saccharose enthalten.

**8.** Verfahren zur Bekämpfung von Schadinsekten oder Akariden, dadurch gekennzeichnet, daß man auf diese oder die von diesen befallenen Pflanzen, Flächen oder Substrate eine wirksame Menge eines wasserdispergierbaren Granulats gemäß einem oder mehreren der Ansprüche 1 bis 7 appliziert.

**9.** Verwendung von wasserdispergierbaren Granulaten gemäß einem oder mehreren der Ansprüche 1 bis 7 zur Bekämpfung von Schadinsekten oder Akariden.

**Claims**

**Claims for the following Contracting States : AT, BE, CH, DE, DK, FR, GB, GR, IT, LI, NL**

**1.** Water-dispersible granules of a compound of the formula I

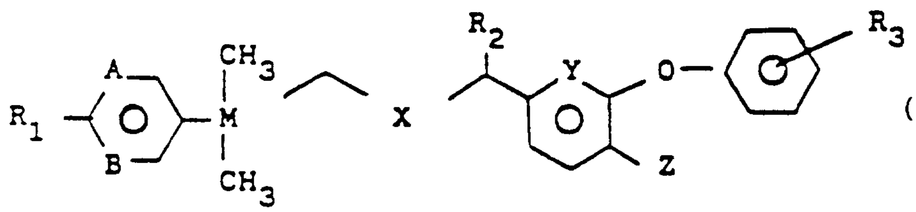

(I),

in which

| | |
|---|---|
| A and B | independently of one another are CH, $CR_4$ or N, |
| X | is $CH_2$, O or S, |
| Y | is CH or N, |
| Z | is H or F, |
| $R_1$ and $R_4$ | independently of one another are H, halogen, $(C_1$-$C_3)$-alkyl, $(C_1$-$C_3)$-haloalkyl, $(C_1$-$C_3)$-alkoxy, $(C_1$-$C_3)$-haloalkoxy, $(C_1$-$C_4)$-alkylthio, or $(C_1$-$C_4)$-haloalkylthio, or $R_1$ and $R_4$ together are $-CH_2$-O-$CH_2$, |
| $R_2$ | is H, $(C_1$-$C_3)$-alkyl, ethynyl, vinyl, halogen, cyano, |
| $R_3$ | is H, halogen, $(C_1$-$C_4)$-alkyl, $(C_1$-$C_3)$-alkoxy and |
| M | is C or Si, |

wherein these contain, in addition to finely divided highly adsorptive silica and suitable wetting and dispersing agents, an aluminum silicate or magnesium aluminum silicate and a mono-, di- or trisaccharide, and the ratio by weight of silica:mono-, di- or trisaccharide is 1:1.8 to 1:3.

**2.** The water-dispersible granules as claimed in claim 1, wherein, in formula I, A and B are CH or N, X is $CH_2$, $R_1$ is $(C_1$-$C_3)$-alkoxy, $R_2$ is H, $R_3$ is H or F and M is Si.

**3.** The water-dispersible granules as claimed in claim 1 or 2, wherein, in formula I, M is Si, $R_1$ is ethoxy, A and B are CH, X is $CH_2$, $R_2$ is H, Y is CH, Z is F and $R_3$ is H.

**4.** The water-dispersible granules as claimed in one or more of Claims 1 to 3, wherein these contain 0.5 to 60 % by weight of a compound of the formula I and the ratio by weight of finely divided highly adsorptive silica therein to the active substance therein is 0.3:1 to 1.1:1.

**5.** The water-dispersible granules as claimed in one or more of claims 1 to 4, wherein these contain 0.5 to 80 % by weight of an aluminum silicate or magnesium aluminum silicate, 5 to 80 % by weight of a mono-, di- or trisaccharide and 3 to 30 % by weight of wetting and dispersing agents.

**6.** The water-dispersible granules as claimed in one or more of claims 1 to 5, wherein these contain 0.5 to 60 % by weight of an aluminum silicate or magnesium aluminum silicate, 20 to 60 % by weight of a mono-, di- or trisaccharide and 5 to 20 % by weight of wetting and dispersing agents.

**7.** The water-dispersible granules as claimed in one or more of claims 1 to 6, wherein these contain sucrose as the disaccharide.

**8.** A method of controlling harmful insects or acarids, which comprises applying an effective amount of water-dispersible granules as claimed in one or more of claims 1 to 7 to the harmful insects or acarids or to the plants, areas or substrates infested with these harmful insects or acarids.

**9.** The use of water-dispersible granules as claimed in one or more of claims 1 to 7 for controlling harmful insects or acarids.

**Claims for the following Contracting State : ES**

**1.** A process for the preparation of water-dispersible granules of a compound of the formula I

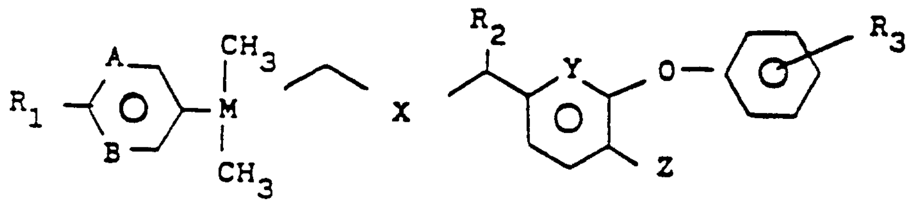

(I),

in which

| | |
|---|---|
| A and B | independently of one another are CH, $CR_4$ or N, |
| X | is $CH_2$, O or S, |
| Y | is CH or N, |
| Z | is H or F, |
| $R_1$ and $R_4$ | independently of one another are H, halogen, $(C_1-C_3)$-alkyl, $(C_1-C_3)$-haloalkyl, $(C_1-C_3)$-alkoxy, $(C_1-C_3)$-haloalkoxy, $(C_1-C_4)$-alkylthio, or $(C_1-C_4)$-haloalkylthio, or $R_1$ and $R_4$ together are $-CH_2-O-CH_2$, |
| $R_2$ | is H, $(C_1-C_3)$-alkyl, ethynyl, vinyl, halogen, cyano, |
| $R_3$ | is H, halogen, $(C_1-C_4)$-alkyl, $(C_1-C_3)$-alkoxy and |
| M | is C or Si, |

which contain, in addition to finely divided highly absorptive silica and suitable wetting and dispersing agents, an aluminum silicate or magnesium aluminum silicate and a mono-, di- or trisaccharide, and in which the ratio by weight of silica:mono-, di- or trisaccharide is 1:1.8 to 1:3, which comprises granulating an adsorbate of the active substance on silica and aluminum silicate or magnesium aluminum silicate in a fluidized bed by spraying with an aqueous solution of mono-, di- or trisaccharide as well as wetting and dispersing agents.

**2.** The process as claimed in claim 1, wherein, in formula I, A and B are CH or N, X is $CH_2$, $R_1$ is $(C_1-C_3)$-alkoxy, $R_2$ is H, $R_3$ is H or F and M is Si.

**3.** The process as claimed in claim 1 or 2, wherein, in formula I, M is Si, $R_1$ is ethoxy, A and B are CH, X is $CH_2$, $R_2$ is H, Y is CH, Z is F and $R_3$ is H.

**4.** The process as claimed in one or more of claims 1 to 3, wherein water-dispersible granules are prepared which contain 0.5 to 60 % by weight of a compound of the formula I and in which the ratio by weight of finely divided highly adsorptive silica therein to the active substance therein is 0.3:1 to 1.1:1.

**5.** The process as claimed in one or more of claims 1 to 4, wherein water-dispersible granules are prepared which contain 0.5 to 80 % by weight of an aluminum silicate or magnesium aluminum silicate, 5 to 80 % by weight of a mono-, di- or trisaccharide and 3 to 30 % by weight of wetting and dispersing agents.

**6.** The process as claimed in one or more of claims 1 to 5, wherein water-dispersible granules are prepared which contain 0.5 to 60 % by weight of an aluminum silicate or magnesium aluminum silicate, 20 to 60 % by weight of a mono-, di- or trisaccharide and 5 to 20 % by weight of wetting and dispersing agents.

7. The process as claimed in one or more of claims 1 to 6, wherein water-dispersible granules are prepared which contain sucrose as the disaccharide.

8. A method of controlling harmful insects or acarids, which comprises applying an effective amount of water-dispersible granules as claimed in one or more of claims 1 to 7 to the harmful insects or acarids or to the plants, areas or substrates infested with these harmful insects or acarids.

9. The use of water-dispersible granules as claimed in one or more of claims 1 to 7 for controlling harmful insects or acarids.

**Revendications**
**Revendications pour les Etats contractants suivants : AT, BE, CH, DE, DK, FR, GB, GR, IT, LI, NL**

1. Granulés dispersibles dans l'eau de composés de formule I

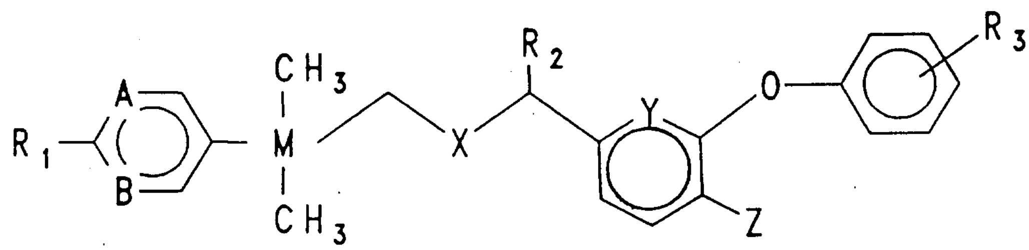

(I),

dans laquelle

A, B signifient, indépendamment l'un de l'autre, un CH, un $CR_4$, un N
X représente un $CH_2$, un O, un S,
Y signifie un CH, un N,
Z représente un H, un F,
$R_1$, $R_4$ signifient, indépendamment l'un de l'autre, un H, un halogène, un alkyle en $C_1$-$C_3$, un halogénoalkyle en $C_1$-$C_3$, un alcoxy en $C_1$-$C_3$, un halogénoalcoxy en $C_1$-$C_3$, un alkylthio en $C_1$-$C_4$, un halogénoalkylthio en $C_1$-$C_4$ ou bien $R_1$ et $R_4$ signifient ensemble un -$CH_2$-O-$CH_2$- ;
$R_2$ représente un H, un alkyle en $C_1$-$C_3$, un éthynyle, un vinyle, un halogène, un cyano,
$R_3$ signigie un H, un halogène, un alkyle en $C_1$-$C_4$, un alcoxy en $C_1$-$C_3$ et
M signifie un C ou un Si,

caractérisés en ce que ceux-ci contiennent, à côté d'un acide silicique hautement adsorbant, finement divisé, et d'agents mouillants et dispersants appropriés, un silicate d'aluminium ou un silicate de magnésium-aluminium et un mono-, di- ou trisaccharide et le rapport pondéral acide silicique:mono-, di- ou trisaccharide est compris entre 1:1,8 et 1:3.

2. Granulés dispersibles dans l'eau selon la revendication 1, caractérisés en ce que, dans la formule I, A, B signifient un CH ou un N, X signifie un $CH_2$, $R_1$ signifie un alcoxy en $C_1$-$C_3$, $R_2$ signifie un H, $R_3$ signifie un H ou un F et M signifie un Si.

3. Granulés dispersibles dans l'eau selon la revendication 1 ou 2, caractérisés en ce que, dans la formule I, M signifie un Si, $R_1$ signifie un éthoxy, A, B signifie un CH, X signifie un $CH_2$, $R_2$ signifie un H, Y signifie un CH, Z signifie un F et $R_3$ signifie un H.

4. Granulés dispersibles dans l'eau selon l'une ou plusieurs des revendications 1 à 3, caractérisés en ce que ceux-ci contiennent de 0,5 à 60% en poids d'un composé de formule I et le rapport pondéral de l'acide silicique finement divisé, hautement adsorbant, qui y est contenu, par rapport à la substance active, qui y est contenue, est compris entre 0,3:1 et 1,1:1.

5. Granulés dispersibles dans l'eau selon l'une ou plusieurs des revendications 1 à 4, caractérisés en ce que ceux-ci contiennent de 0,5 à 80% en poids d'un silicate d'aluminium ou d'un silicate de magnésium-aluminium, de 5 à 80% en poids d'un mono-, di- ou trisaccharide et de 3 à 30% en poids

d'un agent mouillant et d'un agent de dispersion.

**6.** Granulés dispersibles dans l'eau selon l'une ou plusieurs des revendications 1 à 5, caractérisés en ce que ceux-ci contiennent de 0,5 à 60% en poids d'un silicate d'aluminium ou d'un silicate de magnésium-aluminium, de 20 à 60% en poids d'un mono-, di- ou trisaccharide et de 5 à 20% en poids d'un agent mouillant et d'un agent de dispersion.

**7.** Granulés dispersibles dans l'eau selon l'une ou plusieurs des revendications 1 à 6, caractérisés en ce que ceux-ci contiennent du saccharose en tant que disaccharide.

**8.** Procédé de lutte contre les insectes nuisibles ou les acariens caractérisé en ce qu'on applique sur ceux-ci ou sur les substrats ou les surfaces de ces plantes infestées, une quantité active d'un granulat dispersible dans l'eau selon l'une ou plusieurs des revendications 1 à 7.

**9.** Utilisation de granulés dispersibles dans l'eau selon l'une ou plusieurs des revendications 1 à 7 pour la lutte contre les insectes nuisibles ou les acariens.

**Revendications pour l'Etat contractant suivant : ES**

**1.** Procédé de préparation de granulés dispersibles dans l'eau de composés de formule I

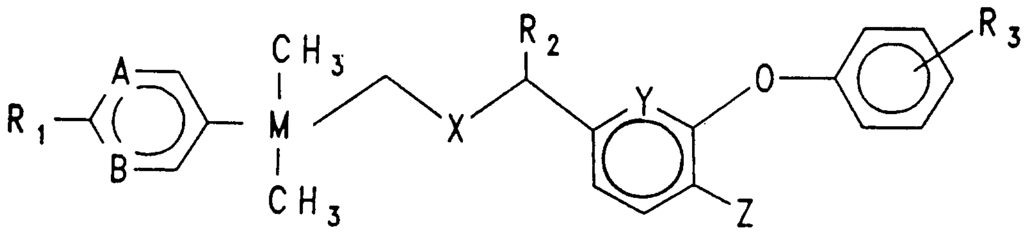

(I),

dans laquelle

| | |
|---|---|
| A, B | signifient, indépendamment l'un de l'autre, un CH, un $CR_4$, un N |
| X | représente un $CH_2$, un O, un S, |
| Y | signifie un CH, un N, |
| Z | représente un H, un F, |
| $R_1$, $R_4$ | signifient, indépendamment l'un de l'autre, un H, un halogène, un alkyle en $C_1$-$C_3$, un halogénoalkyle en $C_1$-$C_3$, un alcoxy en $C_1$-$C_3$, un halogénoalcoxy en $C_1$-$C_3$, un alkylthio en $C_1$-$C_4$, un halogénoalkylthio en $C_1$-$C_4$ ou bien $R_1$ et $R_4$ signifient ensemble un -$CH_2$-O-$CH_2$- ; |
| $R_2$ | représente un H, un alkyle en $C_1$-$C_3$, un éthynyle, un vinyle, un halogène, un cyano, |
| $R_3$ | signigie un H, un halogène, un alkyle en $C_1$-$C_4$, un alcoxy en $C_1$-$C_3$ et |
| M | signifie un C ou un Si, |

lesquels contiennent, à côté d'un acide silicique hautement adsorbant, finement divisé, et d'agents mouillants et dispersants appropriés, un silicate d'aluminium ou un silicate de magnésium-aluminium et un mono-, di- ou trisaccharide et dans lesquels le rapport pondéral acide silicique:mono-, di- ou trisaccharide est compris entre 1:1,8 et 1:3, caractérisé en ce qu'on granule un adsorbat de la substance active sur un acide silicique et un silicate d'aluminium ou bien un silicate de magnésium-aluminium dans un lit fluidisé en l'aspergeant avec une solution aqueuse de mono-, di- ou trisacharide ainsi que d'un agent mouillant ou d'un agent de dispersion.

**2.** Procédé selon la revendication 1, caractérisé en ce que, dans la formule I, A, B signifient un CH ou un N, X signifie un $CH_2$, $R_1$ signifie un alcoxy en $C_1$-$C_3$, $R_2$ signifie un H, $R_3$ signifie un H ou un F et M signifie un Si.

**3.** Procédé selon la revendication 1 ou 2, caractérisé en ce que, dans la formule I, M signifie un Si, $R_1$ signifie un éthoxy, A, B signifie un CH, X signifie un $CH_2$, $R_2$ signifie un H, Y signifie un CH, Z signifie un F et $R_3$ signifie un H.

**4.** Procédé selon l'une ou plusieurs des revendications 1 à 3, caractérisé en ce qu'on prépare des granulés dispersibles dans l'eau, lesquels contiennent de 0,5 à 60% en poids d'un composé de formule I et dans lesquels le rapport pondéral de l'acide silicique finement divisé, hautement adsorbant, qui y est contenu, par rapport à la substance active, qui est y contenue, est compris entre 0,3:1 à 1,1:1.

**5.** Procédé selon l'une ou plusieurs des revendications 1 à 4, caractérisé en ce qu'on prépare des granulés dispersibles dans l'eau, lesquels contiennent entre 0,5 et 80% en poids d'un silicate d'aluminium ou d'un silicate de magnésium-aluminium, de 5 à 80% en poids d'un mono-, di- ou trisaccharide et de 3 à 30% en poids d'un agent mouillant et d'un agent de dispersion.

**6.** Procédé selon l'une ou plusieurs des revendications 1 à 5, caractérisé en ce qu'on prépare des granulés dispersibles dans l'eau, lesquels contiennent de 0,5 à 60% en poids d'un silicate d'aluminium ou d'un silicate de magnésium-aluminium, de 20 à 60% en poids d'un mono-, di- ou trisaccharide et de 5 à 20% en poids d'un agent mouillant et d'un agent de dispersion.

**7.** Procédé selon l'une ou plusieurs des revendications 1 à 6, caractérisé en ce qu'on prépare des granulés dispersibles dans l'eau, lesquels contiennent du saccharose en tant que disaccharide.

**8.** Procédé de lutte contre les insectes nuisibles ou les acariens caractérisé en ce qu'on applique sur ceux-ci ou sur les substrats ou les surfaces de ces plantes infestées, une quantité active d'un granulat dispersible dans l'eau selon l'une ou plusieurs des revendications 1 à 7.

**9.** Utilisation de granulés dispersibles dans l'eau selon l'une ou plusieurs des revendications 1 à 7 pour la lutte contre les insectes nuisibles ou les acariens.